(19) Europäisches Patentamt

European Patent Office

Office européen des brevets

(11) EP 2 706 659 A1

(12) **EUROPEAN PATENT APPLICATION**

(43) Date of publication:
**12.03.2014 Bulletin 2014/11**

(21) Application number: **12183314.9**

(22) Date of filing: **06.09.2012**

(51) Int Cl.:
*H02P 21/13* $^{(2006.01)}$     *H02P 21/14* $^{(2006.01)}$

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Siemens Aktiengesellschaft
80333 München (DE)**

(72) Inventors:
• **Liu, Jiaming
  Sheffield, S10 1DJ (GB)**
• **Zhu, Zi-Qiang
  Sheffield, S10 5TR (GB)**

(54) **System for correcting an estimated position of a rotor of an electrical machine**

(57)    It is described a system (100) for correcting an estimated position of a rotor of an electrical machine. The system comprises an integration unit (101) being adapted to integrate a voltage signal for calculating the third harmonic of a rotor flux-linkage, wherein the voltage signal is indicative for a back electromotive force being induced in the rotor, an estimation unit (102) being adapted to estimate the third harmonic of a rotor flux-linkage based on a feedback signal being indicative for a compensated rotor position, a calculation unit (103) being adapted to calculate a phase error based on the calculated third harmonic and the estimated third harmonic, wherein the phase error is indicative for a rotor position error between an actual rotor position and the estimated rotor position, and a determination unit (104) being adapted to determine a correction value for correcting the rotor position error based on the calculated phase error.

FIG 1

**Description**

Field of invention

The present invention relates to the field of electrical machines, in particular to synchronous machines, comprising a rotor and a stator. In particular, the present invention relates to a correcting system for correcting an estimation of a position of the rotor.

Art Background

In electrical machines, like synchronous machines, it may be necessary to monitor or check the position of a rotor of the electrical machine. There exist some monitoring approaches based on sensors and some sensor-less approaches.

For instance, a sensor-less control or monitoring based on third harmonic back-EMF (electromotive force) is known wherein common approaches are usually based on the zero-crossings of the third harmonic flux-linkage. In this case, only six accuracy position points could be used for rotor position estimation. Thus, the resolution is low and so the accuracy of the estimated rotor position might not be satisfied especially on dynamic situations. This approach or control may be based on a zero-crossing detection of a signal being based on a signal of a flux observer or other observers which may be sensitive to the accuracy of generator and controller parameters. Then the calculated rotor position may contain certain error which is not easy to detect and compensate.

Several sensorless control technologies have been proposed, however, they are all based on the zero-crossings. In some systems, the rotor position is calculated by the integration of rotor speed. In another system, the rotor position error between the estimated and the reference rotor position on each zero-crossing is used to compensate the rotor speed calculated from the previous two zero-crossings. Then after the system reaches steady state, the rotor position can be retrieved.

There may be a need for an improved system being able to provide a detection of an error between an actual position and an estimated position and to provide a correction of the error.

Summary of the Invention

This need may be met by the subject matter according to the independent claims. Advantageous embodiments of the present invention are described by the dependent claims.

According to a first aspect of the invention, there is provided a system for correcting an estimated position of a rotor of an electrical machine, in particular a synchronous machine. The system comprises an integration unit being adapted to integrate a voltage signal for calculating the third harmonic of a rotor flux-linkage, wherein the voltage signal is indicative for a back electromotive force being induced in the rotor, an estimation unit being adapted to estimate the third harmonic of a rotor flux-linkage based on a signal being indicative for a feedback value being indicative for a compensated rotor position, a calculation unit being adapted to calculate a phase error based on the calculated third harmonic and the estimated third harmonic, wherein the phase error is indicative for a rotor position error between an actual rotor position and the estimated rotor position, and a determination unit being adapted to determine a correction value for correcting the rotor position error based on the calculated phase error.

This aspect is based on the idea to use an estimated rotor position (for instance a rotor position being indicative for an already compensated rotor position in the form of a feedback signal, or signals of a flux-observer) and a calculated rotor position for determining an error between the estimated and the calculated rotor position and to adapt the estimation based on this determination.

The calculation of the rotor position may be based on a voltage being derived from the electrical machine, for instance as a voltage between a central point of a Y-connected resistor network and the motor winding neutral. The voltage corresponds to the third harmonic back-EMF which is directly related to the rotor position.

Considering that this sensed voltage contains third harmonic back-EMF (electro-motive force) only, then its integration which is third harmonic flux-linkage will be continuous sinusoidal, has the constant amplitude and directly relates to the rotor position. Applied as reference, the continuous phase error $\Delta\Theta$ (delta Theta) between the reference (i.e. the calculated) and the estimated third harmonic flux-linkage which estimated based on an estimated rotor position can be derived.

According to the above, a simple and improved system for correcting and compensating an estimated rotor position may be achieved as a reference value of the rotor position to be used for the compensation is based on a voltage derived directly from the rotor. Influences of any further sensors or other parameters may thus be reduced. This can be achieved as the third harmonic flux-linkage corresponding to the voltage is continuous sinusoidal, has a constant amplitude and directly relates to the rotor position. The continuous third harmonic flux-linkage is firstly used as reference of rotor position error compensation and has good steady and dynamic performance.

According to an embodiment of the invention, the determination unit comprises a proportional integral (PI) controller.

The PI controller may be used in the form of a loop filter for obtaining the correction value. The PI controller may determine the correction value based on the input value of the calculated phase error. After the system reaches to steady-state, the phase error may converge to zero. If the rotor speed is determined based on the rotor position, the rotor speed or rotor position being calculated from the previous two zero-crossings will be compensated, the phase error will converge to zero and the estimated rotor speed or rotor position will converge to the actual value.

According to a further embodiment of the invention, the further comprises a speed calculation unit being adapted to calculate a rotor speed, wherein the calculated rotor speed is corrected by the correction value, wherein the corrected rotor speed is used for adapting an estimated rotor speed to converge to the actual rotor speed.

According to this embodiment, the correction value and the output value of the speed calculation unit may be used for determining the actual rotor speed and adapting the estimated rotor speed.

According to a further embodiment of the invention, the speed calculation unit is adapted to receive a calculated rotor position from a flux observing unit and is adapted to calculate the rotor speed based on the calculated rotor position.

According to this embodiment, the speed calculation unit may used directly an output of a flux-observer. The flux observing unit may be a flux-observer or any other kind of unit being able to provide a value for the rotor speed based on currents and/or voltages of the three-phase system of the electrical machine.

According to a further embodiment of the invention, the speed calculation unit is adapted to receive the determined third harmonic of the flux-linkage from the integration unit and is adapted to calculate the rotor speed based on the determined third harmonic of the flux-linkage.

According to this embodiment, the speed calculation unit may directly use the output of the integration unit. This may provide a very simple design as no additional input value might be needed for the speed calculation unit.

According to a further embodiment of the invention, the system further comprises a further integration unit, wherein the further integration unit is adapted to integrate the corrected rotor speed, wherein the output of the further integration unit is used for adapting the estimated rotor position to converge to the actual rotor position.

The integration unit may be arranged in a loop with a correction unit for correcting the estimated rotor position, a calculation unit for calculating/estimating the estimated third harmonic, the phase error calculation unit and the PI controller. Thus, a converging adaptation of the estimated rotor position may be achieved during some loops.

According to a further embodiment of the invention, the system is adapted to receive a calculated rotor position from a flux observing unit, wherein the calculated rotor position is corrected by the correction value, wherein the corrected rotor position is used for adapting an estimated rotor speed to converge to the actual rotor speed or for adapting an estimated rotor speed to converge to the actual rotor speed.

In this embodiment, the calculated rotor position which is corrected by the correction value may be derived directly from a flux-observing unit without any calculation in the herein described system.

According to a further embodiment of the invention, the system further comprises a speed calculation unit being adapted to calculate a rotor speed based on the corrected rotor position, wherein the calculated rotor speed is used for adapting an estimated rotor speed to converge to the actual rotor speed.

The rotor speed may be calculated based on the already corrected value. Thus, the output of the speed calculation may be directly used as an adaptation value for the rotor speed.

According to a further embodiment of the invention, the correction value corresponds to a rotor position correction value and/or a speed correction value.

By the herein described system, an estimated rotor position as well as an estimated speed of the rotor may be corrected and the error may be compensated. As the rotor position and the rotor speed depend on each other, this may be easily achieved according to the herein described system.

According to a further embodiment of the invention, the system further comprises a receiving unit being adapted to receive a first signal corresponding to the voltage being indicative for the back electromotive force and to receive a second signal being indicative of one phase of the back electromotive force.

These signals may be provided for instance by a control unit of the electrical machine. Based on the first and the second signal, the correction of the estimated position may be carried out.

According to a further embodiment of the invention, the system further comprises a zero-crossings detection unit being adapted to receive the first signal and being adapted to detect zero-crossings of the first signal.

This may be used for avoiding miss-alignments with the other two cycles of the third harmonic flux-linkage.

According to a further aspect of the invention, there is provided an electrical machine, in particular a synchronous machine. The electrical machine comprises a rotor, a stator, and the system as described above, wherein the system is adapted to correct an estimated position of the rotor.

Such an electrical machine may be coupled to or may comprise a flux-observer being adapted to provide input information to the system as described above. The electrical machine may operate for instance as a generator.

Between the rotor and the stator, a flux-linkage is present, wherein "flux-linkage" may be understood as magnetic flux running through, or linked to a coil. The flux may be linked between the electromagnetic fields of the rotor and the stator. It may be calculated based on the back electromotive force (EMF) of the electrical machine.

According to a further aspect of the invention, there is provided a method for correcting an estimated position of a rotor of an electrical machine, in particular a synchronous machine. The method comprises integrating a voltage for calculating the third harmonic of a rotor flux-linkage, wherein the voltage is indicative for a back electromotive force being induced in the rotor, estimating the third harmonic of a rotor flux-linkage based on a signal being indicative for a feedback value being indicative for a compensated rotor position, calculating a phase error based on the calculated third harmonic and the estimated third harmonic, wherein the phase error is indicative for a rotor position error between an actual rotor position and the estimated rotor position, and determining a correction value for correcting the rotor position error based on the calculated phase error.

According to a further aspect of the invention, there is provided a computer program for monitoring movements of components of a wind turbine, the computer program, when being executed by a data processor, is adapted for controlling the method as described above.

According to a further aspect of the invention, there is provided a computer-readable medium, in which a computer program for correcting an estimated position of a rotor of an electrical machine is stored, which computer program, when being executed by a processor, is adapted to carry out or control a method as described above.

As used herein, reference to a computer program is intended to be equivalent to a reference to a program element and/or a computer readable medium containing instructions for controlling a computer system to coordinate the performance of the above described method.

The computer program may be implemented as computer readable instruction code by use of any suitable programming language, such as, for example, JAVA, C++, and may be stored on a computer-readable medium (removable disk, volatile or nonvolatile memory, embedded memory/processor, etc.). The instruction code is operable to program a computer or any other programmable device to carry out the intended functions. The computer program may be available from a network, such as the World Wide Web, from which it may be downloaded.

The herein disclosed subject matter may be realized by means of a computer program respectively software. However, the herein disclosed subject matter may also be realized by means of one or more specific electronic circuits respectively hardware. Furthermore, the herein disclosed subject matter may also be realized in a hybrid form, i.e. in a combination of software modules and hardware modules.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this document.

The aspects defined above and further aspects of the present invention are apparent from the examples of embodiments to be described hereinafter and are explained with reference to the examples of embodiment. The invention will be described in more detail hereinafter with reference to examples of embodiment but to which the invention is not limited.

Brief Description of the Drawing

Figure 1 shows a correction system according to an exemplary embodiment.

Figure 2 shows a resistor network.

Figure 3 shows signal waveforms of the resistor network of Fig. 2.

Figure 4 shows a control scheme according to an exemplary embodiment.

Figure 5 shows signals of a dynamic test situation.

Figure 6 shows a correction system according to an exemplary embodiment.

Figures 7 and 8 show signals of estimated as well as actual rotor positions and of the error between them at steady-state, according to a prior art method.

Figures 9 and 10 show signals of estimated as well as actual rotor positions and of the error between them at dynamic-state according to a prior art method.

Figure 11 shows signals of estimated as well as actual rotor positions and of the error between them at steady-state, according to the embodiment of Fig. 6.

Figure 12 shows signals of estimated as well as actual rotor positions and of the error between them at dynamic-state, according to the embodiment of Fig. 6.

Figure 13 shows a control scheme according to an exemplary embodiment.

Figure 14 shows a correction system according to an exemplary embodiment.

Figure 15 shows signals of rotor position of the flux-observer as well as actual rotor position and of the error between them at steady-state, before compensation.

Figure 16 shows signals of rotor position of the flux-observer as well as actual rotor position and of the error between them at steady-state as well as the compensated error, after compensation.

Figure 17 shows signals of rotor position of the flux-observer as well as actual rotor position and of the error between them at dynamic-state, before compensation.

Figure 18 shows signals of rotor position of the flux-observer as well as actual rotor position and of the error between them at dynamic-state as well as the compensated error, after compensation.

Figure 19 shows a correction system according to an exemplary embodiment.

Figure 20 shows signals of rotor position of the flux-observer as well as actual rotor position and of the error between them at steady-state as well as the compensated error, after compensation.

Figure 21 shows signals of rotor position of the flux-observer as well as actual rotor position and of the error between them at dynamic-state as well as the compensated error, after compensation.

Detailed Description

The illustration in the drawing is schematically. It is noted that in different figures, similar or identical elements are provided with the same reference signs.

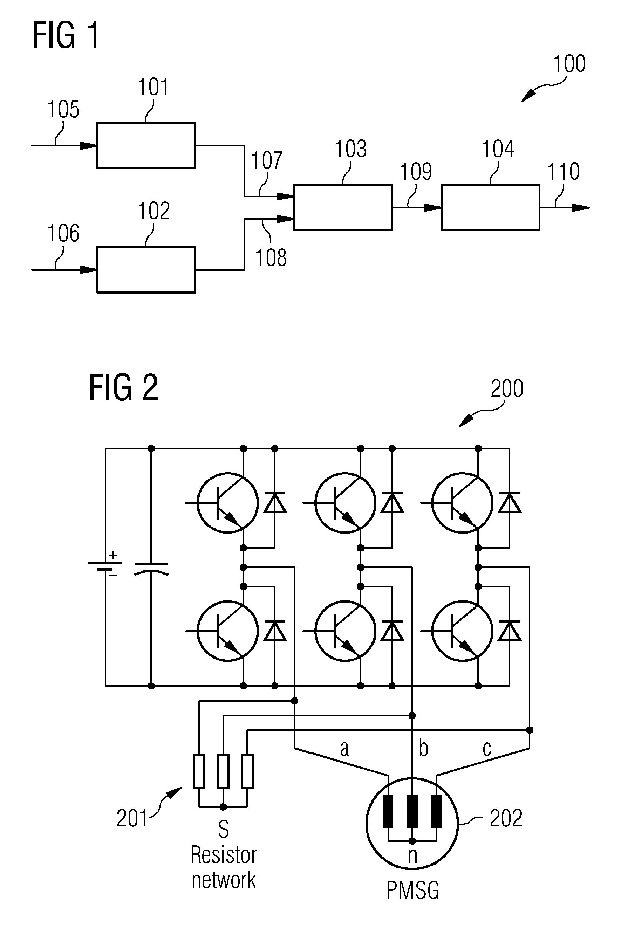

Figure 1 shows a system 100 for correcting an estimated position of a rotor of an electrical machine. The system 100 comprises an integration unit 101, an estimation unit 102, a calculation 103 and a determination unit 104.

The integration unit 101 is adapted to integrate a voltage signal for calculating the third harmonic of a rotor flux-linkage, wherein the voltage signal is indicative for a back electromotive force (back-EMF) being induced in the rotor. The estimation unit 102 is adapted to estimate the third harmonic of a rotor flux-linkage based on a signal being indicative for a feedback value being indicative for a compensated rotor position. The calculation unit 103 is adapted to calculate a phase error based on the calculated third harmonic and the estimated third harmonic, wherein the phase error is indicative for a rotor position error between an actual rotor position and the estimated rotor position. The determination unit 104 is adapted to determine a correction value for correcting the rotor position error based on the calculated phase error.

The voltage signal being integrated by the integration unit corresponds to the third-harmonic back-EMF which is directly related to the rotor position. As shown in Figure 2, the third harmonic can be obtained from the central point "s" 201 of a Y-connected resistor network 200 and the motor winding neutral "n" 202, for instance of a permanent-magnet synchronous generator (PMSG). Clearly, the voltage $u_{sn}$ just represents the third-harmonic back-EMF irrespective of the operational mode of the brushless drive, and it is theoretically free of noise.

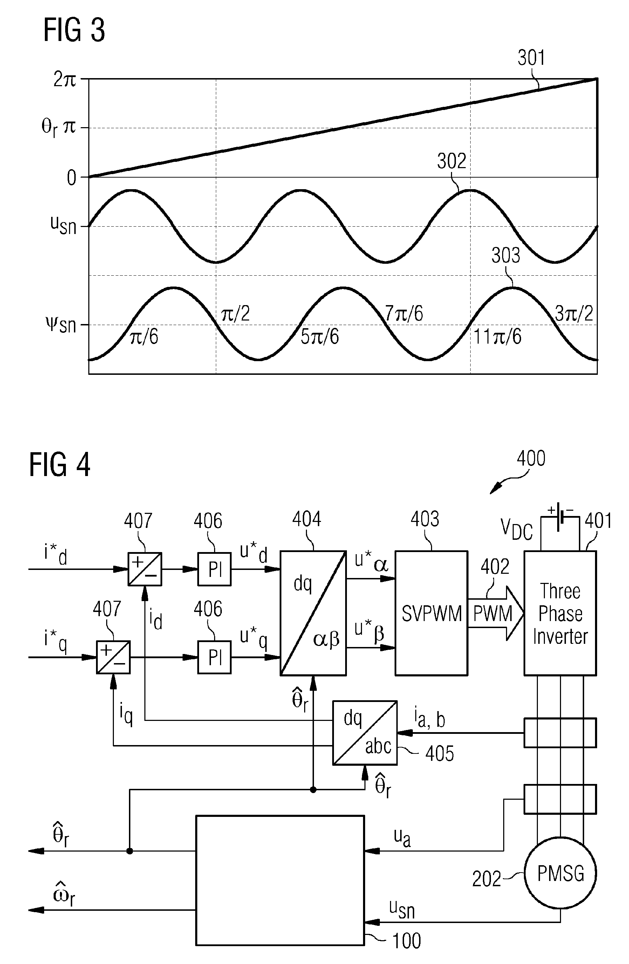

The waveforms of $u_{sn}$ 302, and its integration $\Psi_{sn}$ 303, which is the third-harmonic flux-linkage, are shown in Figure 3 together with the rotor position $\Theta_r$ 301. The zero-crossings of $\Psi_{sn}$ are related to the particular rotor positions of n/6, n/2, 5n/6, 7n/6, 3n/2, 3n/6, elec-rad, respectively.

Considering that $u_{sn}$ contains $e_3$ only, then its integration $\Psi_{sn}$ will be continuous sinusoidal and has a constant

amplitude. The $\Psi_{sn}$ contains full rotor position information. The overall control schematic 400 is shown in Figure 100. The correction system 100 receives input information from the PMSG 202 and the three-phase inverter 401. The three-phase inverter 401 receives a pulse-width modulated (PWM, 402) signal from a space vector PWM (SVPWM, 403). The SVPWM receives signals from an integrator 404 receiving input information from a feedback coupled integrator 405 and two PI-controllers 406. The PI-controllers are feed with signals from two adding units 407 receiving iq and $i_d$.

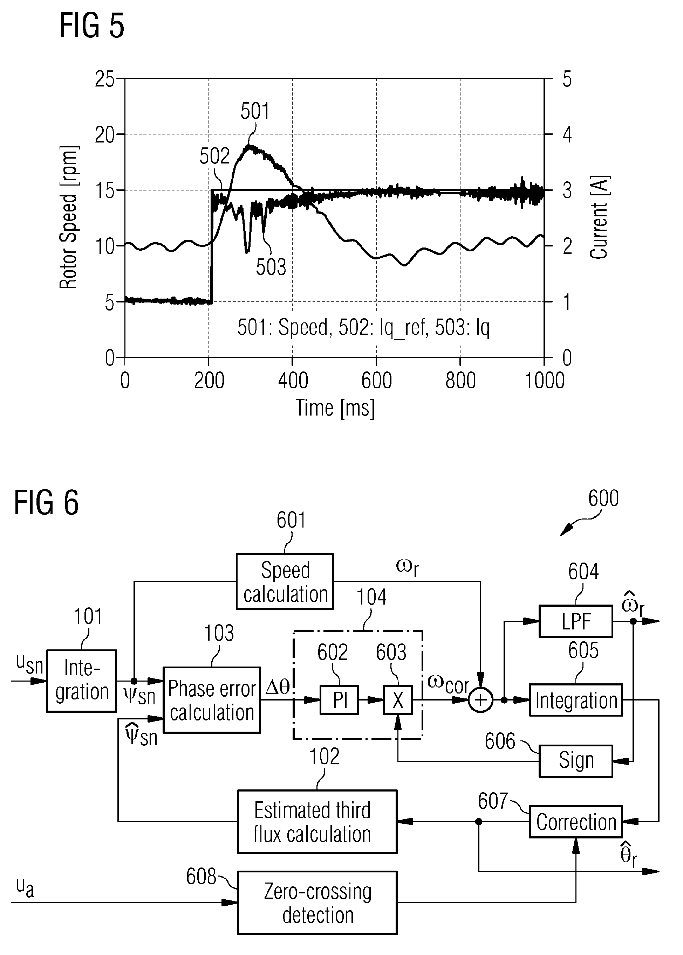

An example of the correction system 100 is shown in Figure 6 in the form of a rotor position estimator 600. The $\Psi_{sn}$^ (input to the phase error calculation 103) in Figure 6 is the virtual third harmonic flux-linkage calculated from the estimated rotor position. If the estimated rotor position and speed are the same as the actual values, $\Psi_{sn}$ and $\Psi_{sn}$^ should be in-phase with each other. In contrast, they will be out of phase when there are estimation errors between the actual and estimated rotor position. If so, the phase difference between the two signals can be used for error compensation. $\Psi_{sn}$ and $\Psi_{sn}$^ can be defined as:

$$\Psi_{sn} = A_P \; sin(3x\Theta_{3rd})$$
$$\Psi_{sn}{}^\wedge = A_P \; sin(3x\Theta_{est}) \qquad\qquad (1)$$

where Ap is the amplitude of $\Psi_{sn}$ which could be obtained from the absolute value of $\Psi_{sn}$ *when* its differential is as small as zero. Also, the related cosine part of $\Psi_{sn}$ should be calculated due to the need of the followed calculation.

To calculate the phase difference, the sine and cosine parts of $\Psi_{sn}$ and $\Psi_{sn}$^ can be expressed as (2) and (3), respectively:

$$\Psi_{sn\_sin} = A_P \; sin(3x\Theta_{3rd})$$
$$\Psi_{sn\_cos} = A_P \; cos(3x\Theta_{3rd}) \qquad\qquad (2)$$

$$\Psi_{sn\_sin}{}^\wedge = A_P \; sin(3x\Theta_{est}) = A_P \; sin[3x(\Theta_{3rd} + \Delta\Theta)]$$
$$\Psi_{sn\_cos}{}^\wedge = A_P \; cos(3x\Theta_{est}) = A_P \; cos[3x(\Theta_{3rd} + \Delta\Theta)] \qquad (3)$$

Then we can get

$$sin(3x\;\Delta\Theta) = sin(3x\Theta_{est} - 3x\Theta_{3rd}) = cos(3x\Theta_{3rd})\;x$$
$$sin(3x\Theta_{est}) - sin(3x\Theta_{3rd})\;x\;cos(3x\Theta_{est})$$

$$cos(3x\;\Delta\Theta) = cos(3x\Theta_{est} - 3x\Theta_{3rd}) = sin(3x\Theta_{3rd})\;x$$
$$sin(3x\Theta_{est}) + cos(3x\Theta_{3rd})\;x\;cos(3x\Theta_{est}) \qquad (4)$$

Consequently, the $\Delta\Theta$ can be derived from the two equations, shown as

$$\Delta\Theta = 1/3 \; arcsin[cos(3x\Theta_{3rd})\;x\;sin(3x\Theta_{est}) - sin(3x\Theta_{3rd})\;x\;cos(3x\Theta_{est})] \qquad (5)$$

Thus, the phase error $\Delta\Theta$ between estimated $\Psi_{sn}$^ and the actual $\Psi_{sn}$ third harmonic flux-linkages is derived. The error can be seen as the rotor position error between the actual and estimated rotor position.

After deriving the rotor position error, the speed correction $\omega_{cor}$ can be obtained by the following PI controller 602 as a loop filter of the proposed estimator as shown in (6). Hence, after the system becomes steady, the $\omega_{cor}$ will become to zero.

$$\omega_{cor} = -[k_P + (k_i x T_s)/1+z^{-1}]x[\Delta\Theta \ x \ sign(\omega_r^\wedge)] \qquad (6)$$

where the sign function $(\omega_r^\wedge)$ is to reflect the rotating direction of the rotor, $T_s$ is the sampling interval and $k_P$ and $k_i$ represent the proportional and integral gains, respectively.

In (6), $\omega_{cor}$ represents a speed correction (determined by the PI controller 602 and a multiplication unit 603) corresponding to the position estimation error, i.e., the phase difference between the reference and estimated third harmonic flux-linkage. The average rotor speed $w_f$ including the intrinsic speed error is appropriately corrected, and then, the estimated rotor speed $\omega_r^\wedge$ is converged to the actual rotor speed. Therefore, the high-resolution rotor position can be estimated by simple integration (605). However, one cycle of back-EMF contains 3 cycles of third harmonic back-EMF which are the same and cannot be separated from each other, hence, the estimated rotor position may align to the other two cycles of third harmonics rather than the right one. Therefore, the phase-A back-EMF ($u_a$) should be considered. On the zero-crossing point of Phase-A back-EMF calculated from flux-observer, the estimated rotor position should be located between -2n/3 and 2n/3. If the rotor position is out of range, then based on the current position error, a rotor position bias which is -2n/3 or 2n/3 will add to the estimated rotor position to correct the error. Hence, the accuracy rotor position can be derived.

As can be seen in Figure 6, $\omega_r$ can be determined by a speed calculation unit 601 from $\Psi_{sn}$. Based on $\omega_r$ and $\omega_{cor}$ and by using a low pass filter (LPF) 604 $\omega_r^\wedge$ can be determined. The sign of the output of the LPF is feeded back to the multiplication unit. A correction unit 607 can correct the $\Theta_r$ based on an output of the integration unit 605 and an output of the zero-crossing detection 608 based on $u_a$.

The steady test is carried out in a situation when the rotor speed is 10rpm and load current is 3A. The dynamic test is carried out in the situation when the rotor mechanical initial speed is 10rpm and the load current changes from 1A to 3A as shown in Figure 5. 501 represent the speed, 502 represents Iq_ref and 503 represents Iq.

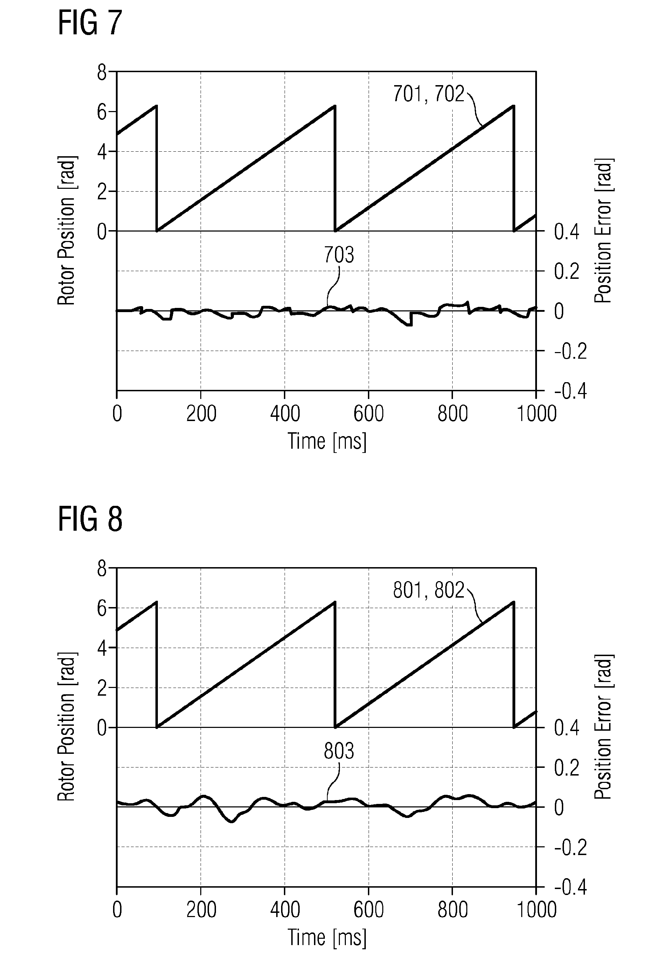

Figures 7 and 8 show the estimated rotor position (701, 801), the actual rotor position (702, 802) and the error (703, 803) between them at the steady-state according to systems of the prior art. As can be seen, in the steady state, the error is small.

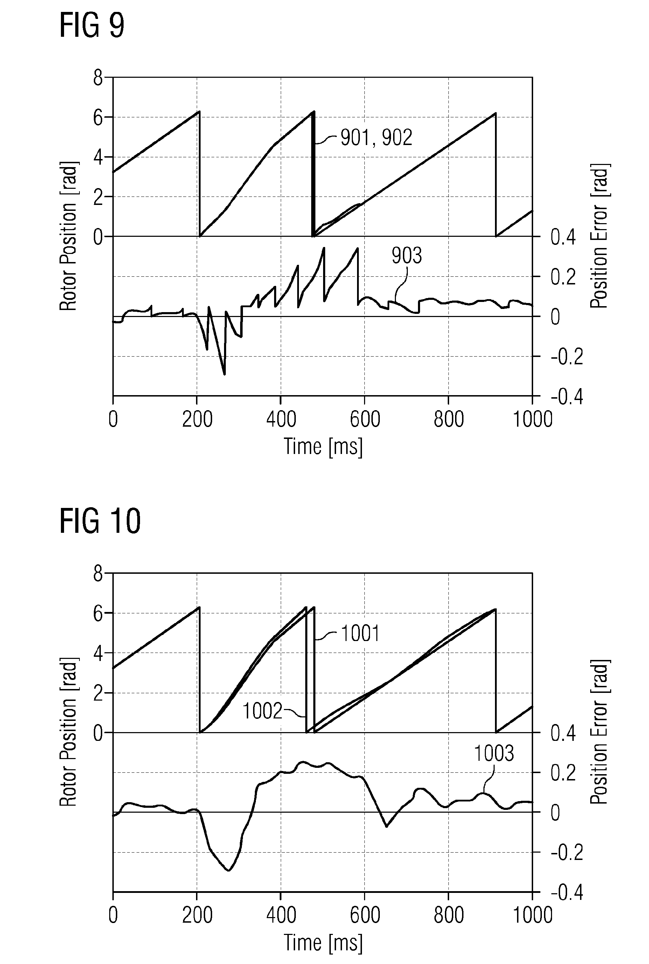

Figures 9 and 10 show the estimated rotor position (901, 1001), the actual rotor position (902, 1002) and the error (903, 1003) between them at the dynamic-state according to systems of the prior art. As can be seen, in the dynamic state, the error is increased.

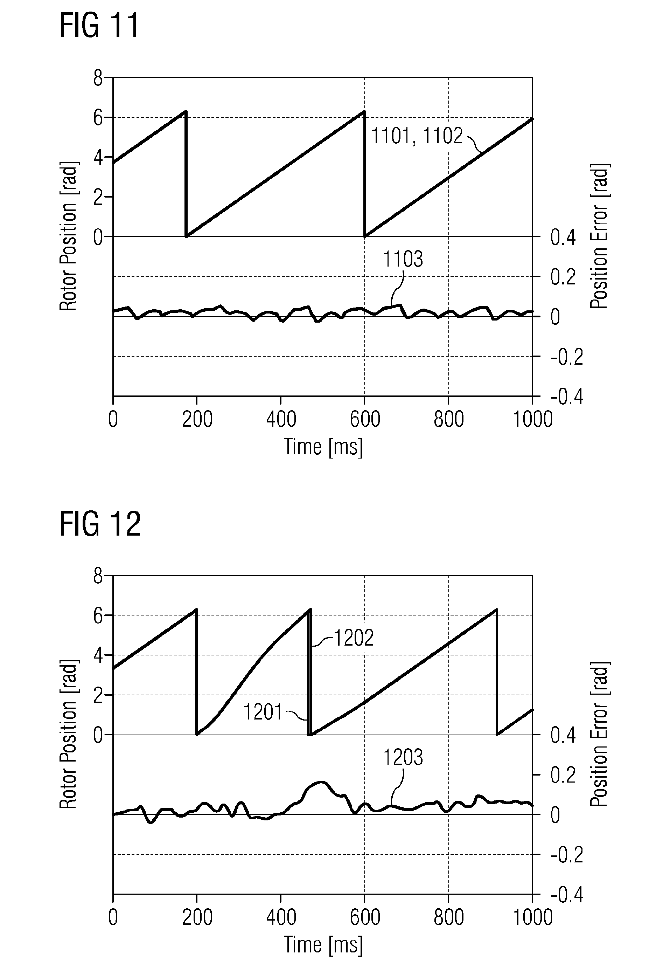

Figures 11 and 12 show the estimated rotor position (1102, 1202) according to the system of Figure 6 and the actual rotor position (1101, 1201) and the error (1103, 1203) between them at the steady and dynamic state. As can be seen, the error in the steady state and the dynamic state is improved compared to the Figures 7 to 10.

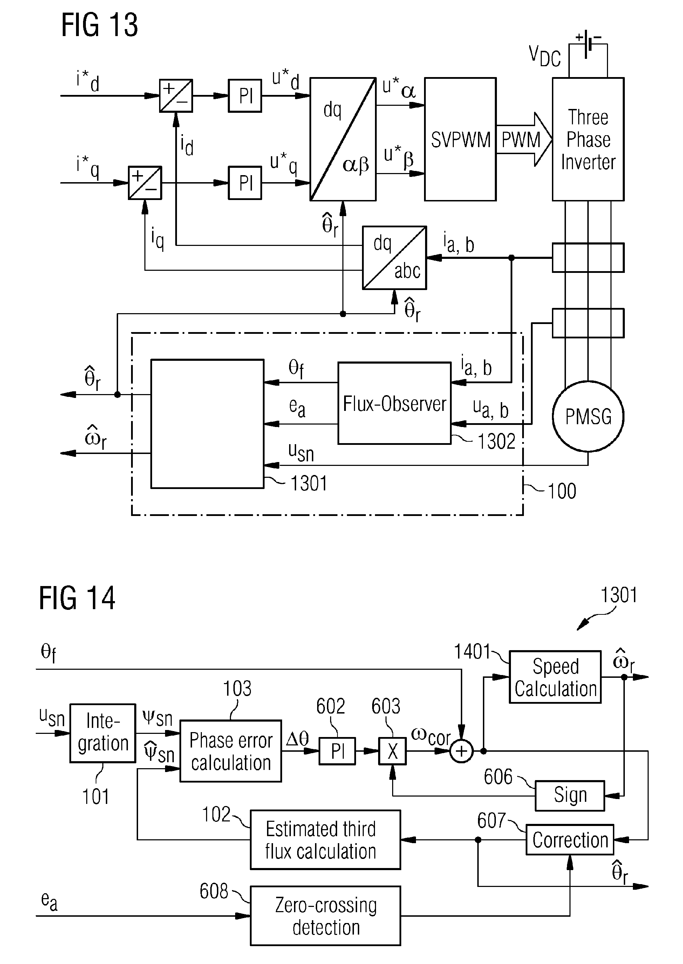

Another exemplary embodiment is shown in Figure 13, which illustrates an overall control schematic like the one in Figure 4. The schematics of Figure 13 and Figure 4 correspond to each other except that in Figure 13, the correcting system comprises a flux-observing unit 1302 being coupled between the PMSG and the correcting arrangement 1301. It can be seen that the rotor position is calculated from flux-observer and compensated by the compensator based on third harmonic back-EMF.

An example of the correcting arrangement of Figure 13 is shown in Figure 14. As the correcting arrangement of Figure 14 comprises many elements of the system as shown in Figure 6, it is referred to the description above.

In the context of Figure 6, it is referred to $\omega_{cor}$ as a correction value for the rotor speed. In the context of the following Figures, the correction value will be referred to as position correction value $\Theta_{cor}$. As these corrections values depend on each other, the equations as explained above are also valid, wherein $\omega_{cor}$ can be exchanged by $\Theta_{cor}$.

$\Theta_{cor}$ in (6) is a rotor position correction corresponding to the position estimation error, viz., the phase difference between the actual and estimated third harmonic flux-linkage. The rotor position calculated from the flux observer including the intrinsic position error is appropriately corrected, and then, the estimated rotor position $\Theta_r^\wedge$ is converged to the actual rotor position.

In contrast to Figure 6, $\Theta_{cor}$ is added directly to $\Theta_f$ derived from the flux-observer. The speed calculation 1401 is carried out afterwards, based on the output of the addition.

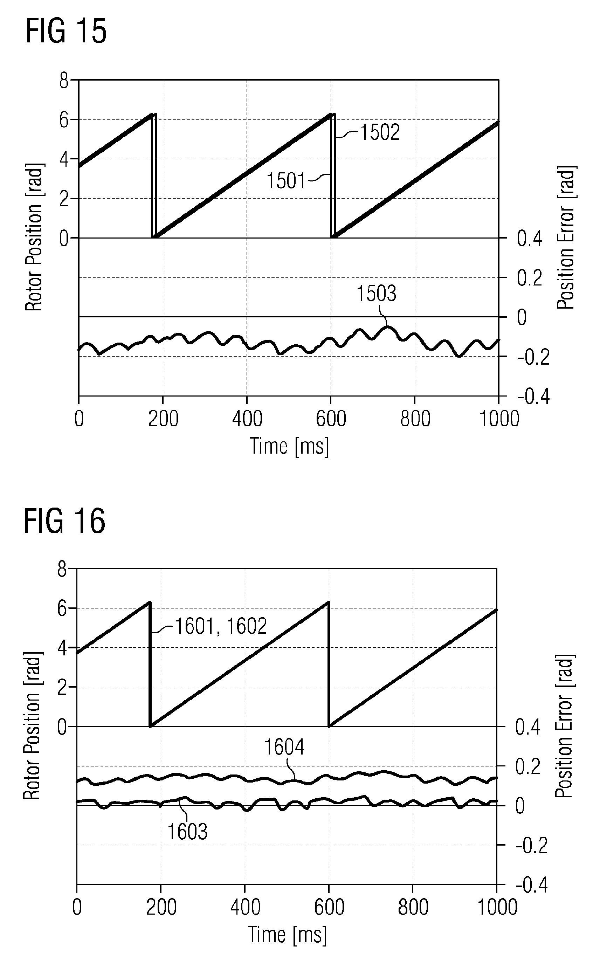

Figure 15 shows experimental results of the rotor positions and the errors before compensation under steady state, wherein 1501 illustrates the flux-observer output, 1502 illustrates the actual rotor position and 1503 illustrates the error.

Figure 16 shows experimental results of the rotor positions and the errors after compensation under steady state, wherein 1601 illustrates the compensated position, 1602 illustrates the actual rotor position, 1603 illustrates the compensated error and 1604 illustrates the actual error.

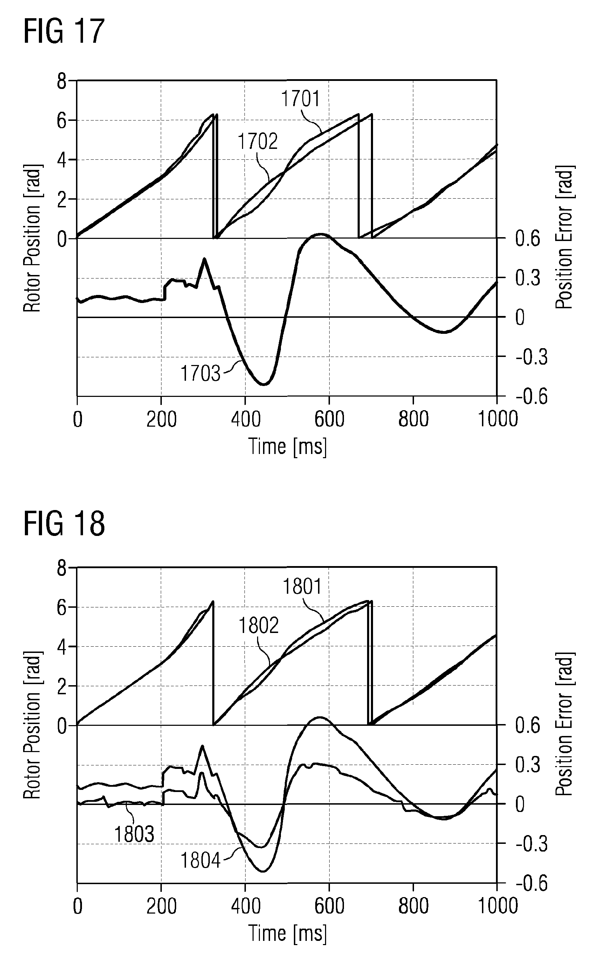

The results under dynamic are shown in Figures 17 and 18 compared with the ones before compensation. 1701 illustrates the flux-observer output, 1702 illustrates the actual rotor position and 1703 illustrates the error. 1801 illustrates the compensated position, 1802 illustrates the actual rotor position, 1803 illustrates the compensated error and 1804 illustrates the actual error.

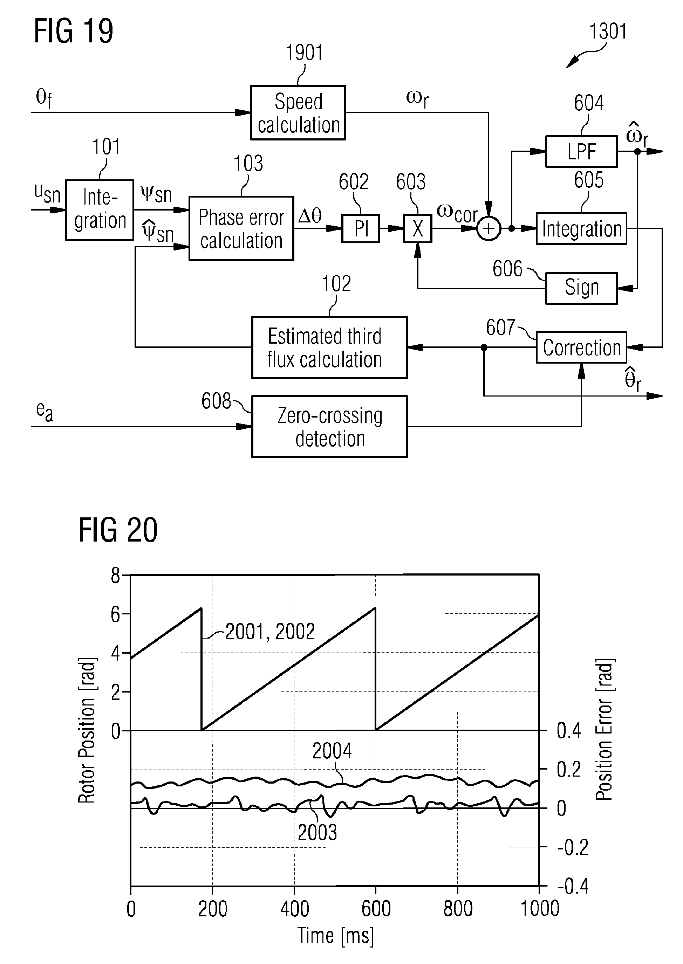

Another example of the correcting arrangement of Figure 13 is shown in Figure 19. As the correcting arrangement of Figure 19 comprises many elements of the systems as shown in Figure 6 and Figure 13, it is referred to the description above.

The compensator as described in Figure 14 is applying the compensation based on a rotor position from the flux-observer, and the speed is calculated from the estimated position. Clearly, significant noise arises in the speed due to the differentiation operation. Further, whilst the average value of the estimated speed may be accurate under steady-state operating conditions, it is usually not fast enough to yield good dynamic response for speed control. In contrast, the rotor speed compensation based on the speed from flux-observer may result in a fast dynamic response with slightly lower accuracy. Therefore, the development of an improved speed error based compensator is of considerable interest.

A compensator improved in view of Figure 14 is shown in Figure 19. In contrast to Figure 6, the speed calculation receives the input signal from the flux-observer.

The rotor speed can be estimated from the rotor position calculated from the flux observer by

$$\omega_f = [\Theta_f(k) - \Theta_f(k-1))]/\Delta t \tag{7}$$

where k is the sampling instant and $\Delta t$ is the during-time between the previous two sampling points. Usually, $\Delta t$ equals to the PWM period which is 5e-6s in this system, hence, the calculated rotor speed has high resolution and can reflect the change of calculated rotor position by flux-observer.

From (6), the position error between the actual and estimated rotor position is obtained. Then, the speed correction $\omega_{cor}$ can be obtained by the following PI controller as a loop filter of the proposed estimator. Hence, after the system researches steady state, $\omega_{cor}$, will become zero.

In (6), $\omega_{cor}$ represents a speed correction corresponding to the position estimation error, i.e., the phase difference between the reference and estimated third harmonic flux-linkage. From (7), the average rotor speed $\omega_f$ including the intrinsic speed error is appropriately corrected, and then, the estimated rotor speed is converged to the actual rotor speed. Therefore, the high-resolution rotor position can be estimated by simple integration. The same as the position error based compensator mentioned above, in one cycle of back-EMF contains 3 same cycles of third harmonic back-EMF. Thus the phase-A back-EMF should be considered to correct the potential error. Then the precise rotor position will be derived.

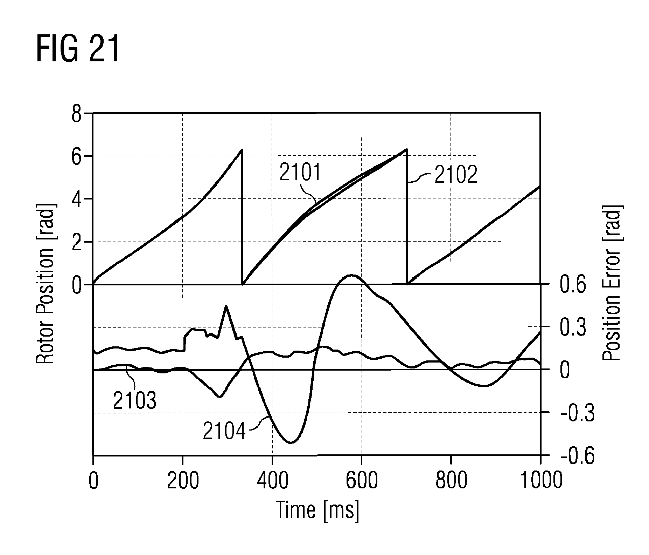

Figures 20 and 21 show the steady and dynamic experimental results of the rotor positions and the errors after compensation under steady state. In Figure 20, the rotor position is adapted under steady state and in Figure 21, the rotor position is adapted under dynamic state. 2001, 2101 illustrate the compensated position, 2002, 2102 illustrate the actual rotor position, 2003, 2103 illustrate the compensated error and 2004, 2104 illustrate the actual error

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A system (100) for correcting an estimated position of a rotor of an electrical machine, in particular a synchronous machine, the system comprising
   an integration unit (101) being adapted to integrate a voltage signal for calculating the third harmonic of a rotor flux-linkage, wherein the voltage signal is indicative for a back electromotive force being induced in the rotor,
   an estimation unit (102) being adapted to estimate the third harmonic of a rotor flux-linkage based on a signal being indicative for a feedback value being indicative for a compensated rotor position,
   a calculation unit (103) being adapted to calculate a phase error based on the calculated third harmonic and the estimated third harmonic, wherein the phase error is indicative for a rotor position error between an actual rotor position and the estimated rotor position, and

a determination unit (104) being adapted to determine a correction value for correcting the rotor position error based on the calculated phase error.

2. The system (100) as set forth in claim 1, wherein the determination unit (104) comprises a proportional integral controller (602).

3. The system (100) as set forth in any one of the preceding claims, further comprising
a speed calculation unit (601, 1901) being adapted to calculate a rotor speed, wherein the calculated rotor speed is corrected by the correction value, wherein the corrected rotor speed is used for adapting an estimated rotor speed to converge to the actual rotor speed.

4. The system (100) as set forth in claim 3, wherein the speed calculation unit (1901) is adapted to receive a calculated rotor position from a flux observing unit and is adapted to calculate the rotor speed based on the calculated rotor position.

5. The system (100) as set forth in claim 3, wherein the speed calculation unit (600) is adapted to receive the determined third harmonic of the flux-linkage from the integration unit and is adapted to calculate the rotor speed based on the determined third harmonic of the flux-linkage.

6. The system (100) as set forth in any one of the claims 3 to 5, further comprising a further integration unit (605), wherein the further integration unit (605) is adapted to integrate the corrected rotor speed, wherein the output of the further integration unit is used for adapting the estimated rotor position to converge to the actual rotor position.

7. The system (100) as set forth in any one of the preceding claims, wherein the system (100) is adapted to receive a calculated rotor position from a flux observing unit (1302), wherein the calculated rotor position is corrected by the correction value, wherein the corrected rotor position is used for adapting an estimated rotor speed to converge to the actual rotor speed or for adapting an estimated rotor speed to converge to the actual rotor speed.

8. The system (100) as set forth in claim 7, further comprising a speed calculation unit (1401) being adapted to calculate a rotor speed based on the corrected rotor position, wherein the calculated rotor speed is used for adapting an estimated rotor speed to converge to the actual rotor speed.

9. The system (100) as set forth in any one of the preceding claims, wherein the correction value corresponds to a rotor position correction value and/or a speed correction value.

10. The system (100) as set forth in any one of the preceding claims, further comprising
a receiving unit being adapted to receive a first signal corresponding to the voltage being indicative for the back electromotive force and to receive a second signal being indicative of one phase of the back electromotive force.

11. The system (100) as set forth in claim 10, further comprising
a zero-crossings detection unit being adapted to receive the first signal and being adapted to detect zero-crossings of the first signal.

12. An electrical machine, in particular a synchronous machine, the electrical machine comprising
a rotor,
a stator, and
the system (100) as set forth in any one of the preceding claims, wherein the system is adapted to correct an estimated position of the rotor.

13. A method for correcting an estimated position of a rotor of an electrical machine, in particular a synchronous machine, the method comprising
integrating a voltage for calculating the third harmonic of a rotor flux-linkage, wherein the voltage is indicative for a back electromotive force being induced in the rotor,
estimating the third harmonic of a rotor flux-linkage based on a signal being indicative for a feedback value being indicative for a compensated rotor position,
calculating a phase error based on the calculated third harmonic and the estimated third harmonic, wherein the phase error is indicative for a rotor position error between an actual rotor position and the estimated rotor position, and
determining a correction value for correcting the rotor position error based on the calculated phase error.

FIG 1

FIG 2

a    b    c

201

S
Resistor
network

202

n

PMSG

## FIG 3

## FIG 4

## FIG 5

501: Speed, 502: Iq_ref, 503: Iq

## FIG 6

FIG 7

FIG 8

## FIG 9

## FIG 10

# FIG 11

# FIG 12

# FIG 13

# FIG 14

## FIG 15

## FIG 16

## FIG 17

## FIG 18

## FIG 19

## FIG 20

FIG 21

Europäisches
Patentamt

European
Patent Office

Office européen
des brevets

**EUROPEAN SEARCH REPORT**

Application Number

EP 12 18 3314

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 10 2010 041021 A1 (BOSCH GMBH ROBERT [DE]) 22 March 2012 (2012-03-22) | 1-5, 10-13 | INV. H02P21/13 H02P21/14 |
| A | * paragraphs [0027], [0032], [0036], [0039]; figures 1,2 * | 6-9 | |
| Y | US 5 510 689 A (LIPO THOMAS A [US] ET AL) 23 April 1996 (1996-04-23) | 1-5, 10-13 | |
| A | * column 24, lines 7-18; figures 1-6,16 * <br> * column 27, lines 19-39 * | 6-9 | |
| Y | US 5 422 570 A (MOREIRA JULIO C [US]) 6 June 1995 (1995-06-06) | 1-5, 10-13 | |
| A | * column 11, lines 5,6; figures 1-17 * <br> * column 12, lines 37-50 * | 6-9 | |
| Y | JP 2009 290980 A (FUJI ELECTRIC SYSTEMS CO LTD) 10 December 2009 (2009-12-10) | 1-5, 10-13 | |
| A | * abstract; figures 1-3 * | 6-9 | |

TECHNICAL FIELDS
SEARCHED (IPC)

H02P

The present search report has been drawn up for all claims

| Place of search | Date of completion of the search | Examiner |
|---|---|---|
| The Hague | 3 January 2013 | Kanelis, Konstantin |

EPO FORM 1503 03.82 (P04C01)

**ANNEX TO THE EUROPEAN SEARCH REPORT
ON EUROPEAN PATENT APPLICATION NO.**

EP 12 18 3314

This annex lists the patent family members relating to the patent documents cited in the above-mentioned European search report.
The members are as contained in the European Patent Office EDP file on
The European Patent Office is in no way liable for these particulars which are merely given for the purpose of information.

03-01-2013

| Patent document cited in search report | Publication date | Patent family member(s) | Publication date |
|---|---|---|---|
| DE 102010041021 A1 | 22-03-2012 | DE 102010041021 A1<br>WO 2012038274 A2 | 22-03-2012<br>29-03-2012 |
| US 5510689 A | 23-04-1996 | NONE | |
| US 5422570 A | 06-06-1995 | CA 2138836 A1<br>DE 69408815 D1<br>DE 69408815 T2<br>EP 0661799 A1<br>US 5422570 A | 01-07-1995<br>09-04-1998<br>18-06-1998<br>05-07-1995<br>06-06-1995 |
| JP 2009290980 A | 10-12-2009 | NONE | |

EPO FORM P0459

For more details about this annex : see Official Journal of the European Patent Office, No. 12/82